Europäisches Patentamt

European Patent Office

Office européen des brevets

(11) Veröffentlichungsnummer: **0 129 179**
**B1**

(12) EUROPÄISCHE PATENTSCHRIFT

(45) Veröffentlichungstag der Patentschrift:
22.03.89

(51) Int. Cl.⁴: **B 60 C 15/00,** B 60 C 15/02

(21) Anmeldenummer: 84106639.2

(22) Anmeldetag: 09.06.84

(54) Fahrzeugrad.

(30) Priorität: 18.06.83 DE 3321978

(43) Veröffentlichungstag der Anmeldung:
27.12.84 Patentblatt 84/52

(45) Bekanntmachung des Hinweises auf die Patenterteilung:
22.03.89 Patentblatt 89/12

(84) Benannte Vertragsstaaten:
DE FR GB IT SE

(56) Entgegenhaltungen:
EP-A- 0 077 161
CH-A- 635 538
DE-A- 2 361 975
DE-C- 63 785
DE-C- 75 352
FR-A- 2 276 952
FR-A- 2 347 213
GB-A- 2 026 957
GB-A- 2 061 199

(73) Patentinhaber: UNIROYAL ENGLEBERT Reifen GmbH,
Hüttenstrasse 7, D-5100 Aachen (DE)

(72) Erfinder: Die Erfinder haben auf ihre Nennung verzichtet

## Beschreibung

Die Erfindung bezieht sich auf ein aus einem Luftreifen und einer einteiligen Radfelge gebildetes Fahrzeugrad, bei dem die Felge aus beidseitig je einem axial außen angeordneten Felgenhorn mit einer radialen Höhe, gemessen vom Felgendurchmesser, und je einer axial innen sich anschließenden ebenen Felgenschulter mit Felgendurchmesser besteht und eine zwischen den Felgenschultern angeordnete, radial erhabene Notlaufstütze aufweist. Diese Stütze besteht aus einer ringartigen Stützfläche mit einem im Vergleich zum Felgenhorndurchmesser mindestens gleich großen Außendurchmesser und beidseitigen Stützwänden, die mit den Felgenschultern verbunden sind. Der Luftreifen weist eine Karkasse mit beidseitigen Reifenwülsten auf, die je einen Reifenfuß mit einer Wulstspitze und je einen zugfesten Wulstkern umfassen, sowie mit einer sich jeweils an den Reifenwulst anschließenden Seitenwand und einem Laufstreifen.

Für den montierten Reifen gilt für den Reifenwulst die Beziehung, daß der radiale Abstand zwischen Wulstkerninnendurchmesser und Felgendurchmesser kleiner ist als die Felgenhornhöhe.

Ein solcher Fahrzeugluftreifen kann nicht wie sonst üblich mit Hilfe eines Tiefbettes an der Radfelge montiert werden, weil das Tiefbett durch die Notlaufstütze ausgefüllt ist.

Um dem Betriebszustand des Notlaufs gerecht zu werden, sind eine Reihe von Hilfsmitteln vorgeschlagen worden, die am Luftreifen und/oder an der Radfelge vorgesehen sind. Im wesentlichen sollen sie die Funktion erfüllen, daß der Reifen daran gehindert wird, von der Felge abzuspringen.

Nach der DE-A-24 14 588 ist es bekannt, einen aufblasbaren Stützkörper vorzusehen. Er ist ebenso wie die Notlaufstütze insoweit nachteilig, da er aufgrund seiner Anordnung im wesentlichen das Tiefbett ausfüllt und dadurch das Montagehilfsmittel Tiefbett sperrt. Aufgrund der erhabenen Form des Stützkörpers wie auch der Notlaufstütze ist die Montage des Reifens erschwert.

Nach der FR-A-22 76 952 ist ein Fahrzeugrad gemäß dem Oberbegriff des Anspruchs 1 bekannt, das aus einem Luftreifen und einer Radfelge mit Notlaufstütze besteht, deren Außendurchmesser größer als der Außendurchmesser des Felgenhornes ist. Der Reifenwulst ist zwischen Felgenhorn und -schulter sowie der Seitenwand der Stütze eingespannt eingeordnet. Ist die Radfelge einteilig ausgebildet, ist eine freie Beweglichkeit des Reifenwulstes bei der Montage nicht gegeben. Die Montagebedingungen hierzu sind nicht erwähnt.

Nach der DE-A-23 61 975 ist ein Fahrzeugrad bekannt, das aus einem Luftreifen und einer Radfelge besteht, bei dem der Innendurchmesser des Wulstringes größer ist als der Außendurchmesser der Radfelge. Der Reifenwulst ist in Sonderbauart mit einer radialen Fußverlängerung versehen und die Felge weist zu deren Aufnahme eine Ringnut auf. Ein solcher Luftreifen in Sonderbauart ist wegen des vergrößerten Wulstringdurchmessers günstig auf eine Radfelge ebenfalls in Sonderbauart aufzuziehen. Zum Montieren wird der Reifenwulst hebelartig in die Nut geklappt, wobei der Wulstring frei bewegbar ist. Ein solches Fahrzeugrad ist jedoch gegenüber den axialen Kräften, die auf den Reifen einwirken, sehr ungünstig, insbes. bei Druckluftverlusten. Die Reifenwülste können dann nicht zuverlässig in den Felgennuten gehalten werden und springen von der Radfelge ab.

Die Erfindung geht von der Erkenntnis aus, daß ein Fahrzeugrad täglich seine normalen Fahrbetriebsfunktionen zuverlässig zu erfüllen hat. Es soll für den eventuellen Notfall mit einem geeigneten Hilfsmittel versehen sein, das die Last trägt und den Reifen daran hindert, von der Felge abzuspringen. Ein solches Hilfsmittel soll baulich einfach, leicht und ausreichend tragfähig sein. Es soll jedoch auch eine problemlose Reifenmontage gewährleisten, wobei die Montierbarkeit des Luftreifens verbessert werden soll.

Die technische Aufgabe nach der Erfindung besteht darin, auf einfache Weise einen Fahrzeugluftreifen auf eine einteilige Felge mit einer Notlaufstütze zu montieren, bei dem die Montierhilfsmaßnahme mit der Wulstausbildung gegeben ist.

Gelöst wird diese Aufgabe bei einem gattungsgemäßen Fahrzeugrad erfindungsgemäß durch die kennzeichnenden Merkmale des Anspruchs 1.

Durch diese Ausbildung des Reifenwulstes und durch die Hebelbewegung wird der Reifen problemlos auf die Felge gezogen und dann durch eine exzenterartige Verlagerung des Reifenwulstes auf der Felgenschulter in die Betriebsendstellung bewegt.

Der freie Raum zwischen Felgenhorn und -schulter sowie der Notlaufstütze wird in Verbindung mit dem außermittig angeordneten Wulstring genutzt, um einen solchen Fahrzeugluftreifen problemlos auf eine Felge mit Notlaufstütze zu montieren, wobei der Fahrzeugluftreifen selbst Standardmaße in bezug auf Felgenhorn und Felgenschulter aufweist und die Radfelge selbst ebenfalls Standardmaße aufweist, jedoch mit der Notlaufstütze versehen ist.

Hierdurch ist zuverlässig gewährleistet, daß eine sichere Klemmverbindung zwischen Reifenwulst und Radfelge zustandekommt, die für den täglichen Fahrbetrieb erforderlich ist. Im Notlauffalle wird diese Klemmverbindung gelöst, jedoch der Reifenwulst daran gehindert, von der Felge abzuspringen.

Die Reifenwülste sind aufgrund der Dreh- und exzenterartigen Hebelbewegung im Bereich der Felgenschulter in der Lage, daß sie durch die auf sie einwirkenden Kräfte bei sich aufbauendem Innendruck selbsttätig ihre Lage von der Einbaustellung in eine um einen vorbestimmten, wählbaren Bogenwinkel abweichende Endstellung ändern, in der sie fest an Felgenhorn und -schulter angepreßt vorliegen. Für den Fall des Notlaufs, bei dem der luftarme bzw. luftleere Reifen mit der Innenfläche mit wesentlichen Teilen auf der kappenartigen Notlaufstütze aufliegt, trägt die Drehfähigkeit der Reifenwülste im Bereich der Felgenschulter wesentlich mit dazu bei, die nachteiligen Relativbewegungen zu mindern.

Für die gute Montierbarkeit ist es wichtig, daß der Reifenwulst nach axial außen und innen durch Abstützen der Fußspitze auf der Felge ausreichend und selbsttätig verlagerungsfähig ist, so daß der Luftreifen auf einer tiefbettfreien Felge jederzeit problemlos montiert werden kann. Wichtig ist ferner, daß dieser Reifenwulst mit einer Außenkontur und Sitzfläche, die auf Standardfelgen passen, durch einen fest angepreßten Sitz die Klemmverbindung mit der Felge schafft, die Voraussetzung für die sichere Kraftübertragung ist.

Der unter Innendruck stehende Luftreifen übt auf den Reifenwulst einen Druck aus, der die Verbindung Reifen/Felge zuverlässig gegen Innendruckverlust schützt. Der Wulstkern gerät bei diesem Vorgang unter Zugspannung.

Die Felge kann abgesehen von der Notlaufstütze ausgebildet sein wie eine Standardfelge, entweder mit B-, C- oder J-Horn. Der Fahrzeugluftreifen mit den Reifenwülsten nach Erfindung kann jedoch auch auf Felgen mit zylindrischen oder von der Radachse weg geneigten Felgenschultern montiert werden. Im Falle einer Notlaufsituation ist ein solches Rad nach Erfindung dem üblichen Rad mit Tiefbettfelge überlegen.

Der radial erhabene Stützteil der Felge ist kappenartig ausgeführt, wobei die Stützfläche zylindrisch, bevorzugt jedoch erhaben gekrümmt ausgebildet ist. Bevorzugt ist das Stützteil kontinuierlich integriert in die einteilige Felge einbezogen. Die Seitenwände der Notlaufstütze schließen an den Felgenschultern an und sind zur Äquatorialebene hin geneigt ausgebildet. Eine solche Baueinheit bleibt auch gewahrt, wenn aus fertigungstechnischen Gründen die kappenartige Stütze getrennt vorliegt und durch bekannte Befestigungsmittel zu einer Felgeneinheit vereinigt ist. Hierbei kann das gleiche oder ein abweichendes Material für den Kappenring im Vergleich zu dem übrigen Teil der Felge verwendet werden.

Nach weiteren Merkmalen der Erfindung kann der Wulstkern aus verdrallten Runddrähten oder aus zur Normalen gewickelten Drähten mit viereckigem oder sechseckigem Querschnitt bestehen. Der Querschnitt kann rund oder zur Rundform ergänzt sein und kann von einem Gewebestreifen umfaßt sein. Dieser liegt bevorzugt nicht mitvulkanisiert vor; er ist haftungsfrei angeordnet. Der Wulstkern kann auch aus technischen Garnen, flexiblen Kabeln aus nichtmetallischem Material gebildet werden. Der Wulstverstärker kann im Bereich des Wulstfußes bis auf den Felgenscheuerstreifen herabgezogen angeordnet und der Zwischenraum mit einem höhere Pressung zulassenden Kautschukfüllstück ausgefüllt sein.

In bezug auf eine günstige Wulstinnenkontur kann der Reifenwulst zwischen der Wulstkrümmung im Bereich des Wulstkerns und der Fußspitze um bis zu 30° axial nach außen abgeschrägt vorliegen.

Durch die geschlossene Bauform der Felgenschulter, die einerseits vom Felgenhorn und andererseits von der seitlichen Wand der Notlaufstütze begrenzt ist, wird der Reifenwulst sicher auf der Felge gehalten, wenn hohe Seitenkräfte wirksam sind. Ein Reifenabwurf bei Kurvenfahrt unter extrem hohen Seitenkräften ist praktisch ausgeschlossen. Das Sicherheitsverhalten des Fahrzeugrades nach Erfindung ist dadurch wesentlich verbessert.

Die Felge kann zusätzlich im axial inneren Bereich benachbart zur Felgenschulter eine radiale Rille aufweisen. Sie dient dazu, den Reifenwulst bei im Notlauf druckarm bzw. drucklos gewordenem Luftreifen mit dessen verschobenem Fersenteil aufzunehmen. Die Mitlaufbewegung wird dadurch verbessert. Bei vorhandenen reibungsmindernden Schichten ist eine weitere Verbesserung vorhanden. Die bei Notlauf wirksamen Seitenkräfte können den Wulst nicht von der Felge abdrükken. Der vom Felgenhorn gelöste Reifenwulst bewegt sich auf einer Art Gleitschiene bis zur Anlage an die Seitenwand der Notlaufstütze. Ein wesentlicher Teil des luftarmen bzw. luftleeren Reifens liegt auf der Notlaufstütze auf. Dennoch liegen wegen der Drehfähigkeit der Wülste verhältnismäßig geringe Relativbewegungen vor. Eine notwendige Schmierung ist deshalb beim Fahrzeugrad nach Erfindung nicht so zwingend erforderlich wie bei bekannten Notlaufsystemen.

Weitere Einzelheiten der Erfindung sind in der Zeichnung dargestellt und erläutert. An Hand der Ausführungsbeispiele sind gezeigt in

Fig. 1 ein radialer Teilschnitt durch ein Fahrzeugrad,

Fig. 2 eine schematisch dargestellte Felge mit verschiedenen Montagestellungen des Reifenwulstes,

Fig. 3 eine vergrößerte Einzelheit der schematischen Darstellung eines Teils der Felge mit dem Reifenwulst in verschiedenen Stellungen auf der Reifenschulter,

Fig. 4a ein Reifenwulst mit Rundkern,

Fig. 4b ein Reifenwulst mit Viereckkern,

Fig. 5 eine Felge mit zylindrischen Felgenschultern,

Fig. 6 eine Felge in geteilter Bauweise.

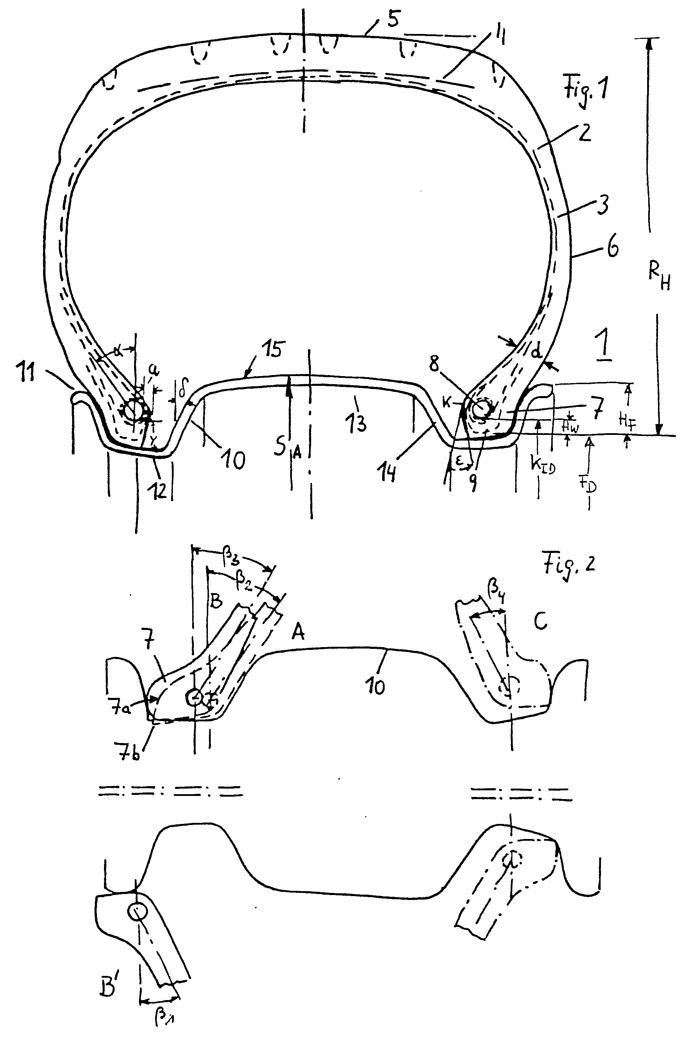

Der Fahrzeugluftreifen 2 des Fahrzeugrades 1 gemäß Fig. 1, das als Notlaufrad verwendbar ist, besteht im wesentlichen aus einer Reifenkarkasse 3, einem durch einen Gürtel 4 verstärkten Laufstreifen 5, den Seitenwänden 6 und den Reifenwülsten 7. Diese Wülste weisen je einen Wulstkern 8 auf, an denen die Karkasse verankert ist.

Bevorzugt ist der Wulst durch einen Wulstverstärker 9 versteift ausgebildet. Der Endeinbauwinkel $\alpha$ wird gemessen zwischen der neutralen Faser und der Senkrechten auf der Radachse, die durch den Wulstkern verläuft. Die Innenkrümmung des Wulstes ist mit k bezeichnet. Der Wulstkern 8 nimmt eine Lage im Wulst ein, die im Abstand y radial zwischen Kerninnendurchmesser $K_{ID}$ und Felgendurchmesser $F_D$ gemessen mindestens $0,4 \times$ Felgenhornhöhe $H_F$ beträgt. Axial liegt der Wulstkern im Abstand a axial innen zwischen Wulstkern und Krümmung k gemessen höchstens bis $0,5 \times$ Wulstfußhöhe $H_W$. Das Verhältnis Wulstfußhöhe zu Axialabstand a ist größer 2,0.

Die Felge 10 des Fahrzeugrades 1 besteht im wesentlichen aus einem Felgenhorn 11, einer Felgenschulter 12 und einem im Querschnitt kappenartigen, radial erhabenen Stützteil 13. Die Seitenwände 14 sind zur Äquatorebene hin geneigt ausgebildet. Der Winkel $\delta$ kann 10° und mehr betragen. Der Außendurchmesser $S_A$ der gewölbt vorliegenden Stützfläche 15 ist im Vergleich zum Felgenhorndurchmesser $F_{HD}$ gleich groß oder bis zur halben Reifenhöhe $R_H$ größer.

In Fig. 2 sind die einzelnen Einbaulagen der Reifenwülste gezeigt. In der linksseitigen Darstellung ist der Reifenwulst (strichlierte Lage) in einer ersten Montagestellung A gezeigt und in Stellung B in einer weiteren Montagestellung.

Die Wülste 7 sind zunächst nach axial außen gerichtet. In Stellung B' ist gezeigt, wie der Wulst anfangs über das Felgenhorn gezogen wird. In der rechtsseitigen Darstellung C befindet sich der Reifenwulst bereits auf der Felge. In diesen Stellungen sind die Wülste nach axial außen gedreht. Die Winkelphasen des Einbaus zeigen $\beta_1$, $\beta_2$, $\beta_3$ und $\beta_4$.

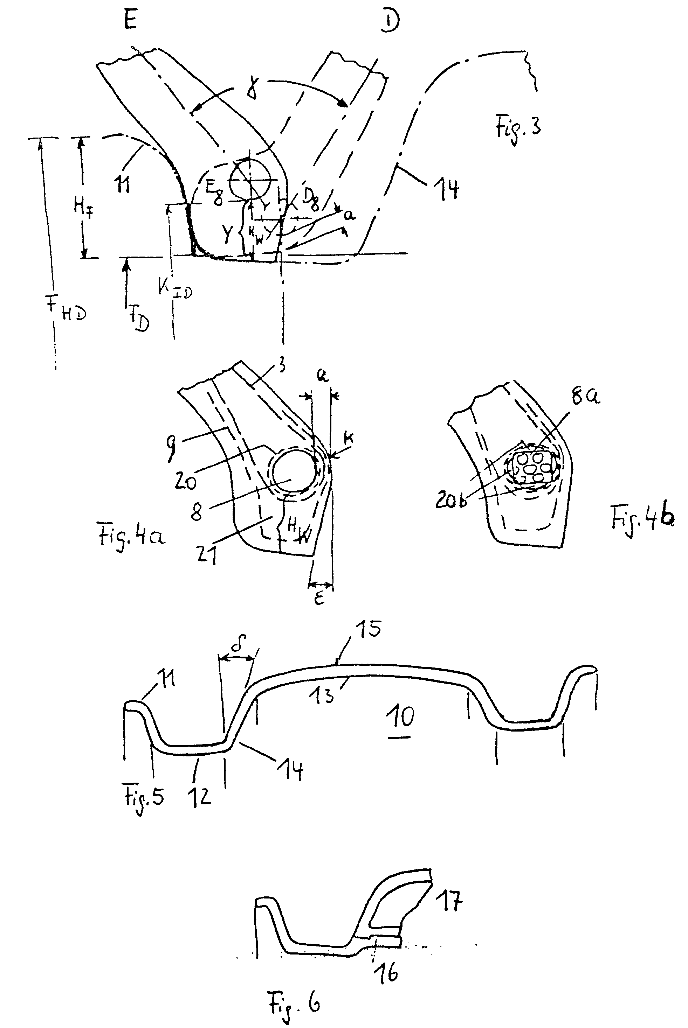

In Fig. 3 sind zwei wesentliche Stellungen des Reifenwulstes 7 auf der Felgenschulter dargestellt. Die Stellung D zeigt den nach axial außen gedrehten Wulst beim Abstützen der Fußspitze auf der Felgenschulter. Die Lage des Wulstkerns kennzeichnet $D_8$. Das ist der Beginn der hebelartigen Verlagerung des Reifenwulstes, wobei sich die Lage des Wulstkerns exzenterartig ändert. Infolge der wirksamen Kräfte des sich aufbauenden Innendrucks durch die eingepumpte Druckluft bewegt sich der Wulst um einen Bogenwinkel $\gamma$ bis in die Endstellung, bei der die Wulstflächen an dem Felgenhorn und der Felgenschulter gepreßt anliegen. Die Lage des Wulstkerns kennzeichnet $E_8$; es ist die Lage E mit fester Klemmverbindung zwischen Reifenwulst und Felge.

In Fig. 4a ist ein Wulst dargestellt, dessen Karkasse 3 und Wulstverstärker 9 in bezug zum Rundkern 8 gezeigt sind. Die Gewebeumwicklung um den Wulstkern ist mit 20 und ein Preßkautschukfüllteil ist mit 21 bezeichnet. Die Wulstinnenkontur ist axial innen zwischen Krümmung k und Wulstspitze unter Winkel $\varepsilon$ von bis zu 30° abgeschrägt ausgebildet. Die Fig. 4b zeigt einen Viereckkern 8a mit an den Seiten angebrachten Füllstreifen 20b zum Erreichen einer Rundform.

Die Fig. 5 zeigt im radialen Teilschnitt die Felge 10 mit Horn 11 und einer zylindrischen Felgenschulter 12, Seitenwand 14 der Notlaufstütze 13 und erhaben gewölbter Stützfläche 15. Der Neigungswinkel $\delta$ der Seitenwände kann 10° bis 60° betragen. Die Felgenschulter kann auch zur Abstützfläche hin geneigt ausgebildet werden.

Die Fig. 6 zeigt eine Bauweise der Felge, bei der der Felgenteil mit Horn und Schulter an der Trennebene 16 mit dem Kappenring 17 fest, jedoch lösbar verbunden ist. Das Material für die Kappe kann gleich oder unterschiedlich sein zu dem des übrigen Felgenteils.

Das Felgenhorn und der axial innere Teil der Felgenschulter 12 wie auch die Stützfläche 15 können mit einer reibungsmindernden Schicht, wie z.B. Teflon o.a., versehen sein.

Bei Fahrzeugrädern, die für den Notlauf verwendbar sind, sind folgende Merkmale von Bedeutung:

Der Luftreifen soll eine strukturelle Haltbarkeit wie ein normaler Fahrzeugluftreifen aufweisen; das Eigenschaftsbild des Luftreifens soll wie bei einem normalen Fahrzeugluftreifen gegeben sein; das Verhalten des Wulstes bei starken Seitenkräften infolge Druckluftverlustes soll verbessert sein (Rim-Roll-Off-Verhalten); die Fahrsicherheit im Notlauffall soll gewährleistet sein; der Druckverlust sollte dem Fahrzeugführer angezeigt werden; die Fahrstrecke im Defektfall sollte bis zur nächsten Werkstatt durchfahrbar sein; der Radsatz soll im Bedarfsfall auf vier montierte Räder beschränkt sein; das Reserverad soll entbehrlich sein aus Platz- und Gewichtsersparnisgründen; das Fahrzeugrad soll als Erstausrüstungsbestandteil von den Fahrzeugherstellern eingeplant werden; die Kosten sollen insgesamt günstig sein; die problemlose Handhabung von Reifen und Felge bei Montage und Demontage muß gegeben sein; Reifen und Felge sollen möglichst einfach herstellbar sein; die Wiederverwendbarkeit nach Notlauf sollte gegeben sein; die Herstellung der Felge in einteiliger Bauart sollte gegeben sein.

**Patentansprüche**

1. Aus einem Luftreifen (2) und einer einteiligen Radfelge (10) gebildetes, für den Notlauf verwendbares Fahrzeugrad, bei dem die Felge beidseitig je ein axial außen angeordnetes Felgenhorn (11) mit radialer Höhe $H_F$ – gemessen vom Felgendurchmesser $F_D$ – je eine axial innen sich anschließende ebene Felgenschulter (12) und eine zwischen den Felgenschultern angeordnete, radial erhabene, im Querschnitt kappenartige Notlaufstütze (13) aufweist, die aus mit den Felgenschultern (12) verbundenen Stützwänden (14) und aus einer ringartigen Stützfläche (15) mit einem Außendurchmesser $S_A$ gebildet ist, der mindestens dem Felgenhorndurchmesser $F_{HD}$ plus der zweifachen Wanddicke (d) der Seitenwand (6) im Wulstübergangsbereich entspricht, jedoch nicht größer ist als der Felgenhorndurchmesser $F_{HD}$ plus der halben Höhe ($R_H$) des Reifenquerschnitts, und bei welchem Fahrzeugrad der Luftreifen (2) eine, insbesondere radiale, Karkasse (3) mit beidseitigen Reifenwülsten (7) aufweist, die je einen ebenen Wulstfuß (7a) mit einer Wulstspitze (7b) und je einen zugfesten Wulstkern (8) umfassen, sowie mit einem profilierten, insbesondere gürtelverstärkten, Laufstreifen (5), wobei der radiale Abstand y des Wulstkerninnendurchmesser $K_{ID}$ vom Felgendurchmesser $F_D$ kleiner ist als die radiale Höhe $H_F$ des Felgenhorns (11), dadurch gekennzeichnet, daß für den in seiner Betriebsstellung (E) montierten Reifen folgende Beziehungen für den Reifenwulst gelten: $0{,}4H_F < Y < H_F$ und a $< 0{,}5H_W$, wobei «a» der axiale Abstand des Wulstkerns axial innen zur radial verlaufenden Tangente an der Wulstinnenkontur K und «$H_W$» die radiale Wulstfußhöhe ist – gemessen zwischen Wulstkerninnendurchmesser $K_{ID}$ und Wulstfuß 7a –, daß der Wulstkern (8) auf der neutralen Faser der Seitenwand (6) liegt und drehbar und außermittig im Reifenwulst (7) gelagert ist, derart, daß der Reifenwulst (7) aus einer Montagestellung (D) — bei der der Wulstkern (8) gegenüber der Betriebsstellung (E) axial und radial nach innen (D₈) versetzt vorliegt — in die Betriebsstellung (E) schwenkbar ist und dabei, bezogen auf seine neutrale Faser, in bezug auf eine Senkrechte zur Radachse, die durch den Wulstkern (8) verläuft, um einen Bogenwinkel γ hebelartig auf der Felgenschulter (12) bewegbar ist, wobei sich die Wulstspitze (7b) stets auf der Felgenschulter (12) abstützt und der Reifenwulst (7) frei im Raum zwischen Felgenhorn (11), Felgenschulter (12) und Notlaufstütze (13) exzenterartig bewegbar ist.

2. Luftreifen-Fahrzeugrad nach Anspruch 1, dadurch gekennzeichnet, daß der Bogenwinkel γ mindestens 45° beträgt (Fig. 3).

3. Luftreifen-Fahrzeugrad nach Anspruch 1 und 2, dadurch gekennzeichnet, daß der Wulstkern (8) ein an sich bekannter verseilter Drahtrundkern ist (Fig. 4a).

4. Luftreifen-Fahrzeugrad nach Anspruch 1 und 2, dadurch gekennzeichnet, daß der Wulstkern (8a) ein an sich bekannter im Querschnitt viereckiger bis sechseckiger Drahtkern ist, der außen mit einem Materialstreifen versehen ist, durch den eine Rundform gebildet ist (Fig. 4b).

5. Luftreifen-Fahrzeugrad nach Anspruch 3 bis 4, dadurch gekennzeichnet, daß der Wulstkern bzw. Rundformkern mit einem Gewebe umfaßt ist.

6. Luftreifen-Fahrzeugrad nach Anspruch 1 bis 5, dadurch gekennzeichnet, daß ein aus nichtmetallischen Faden-, Kabel- oder Seilelementen gebildeter Wulstkern vorliegt.

7. Luftreifen-Fahrzeugrad nach Anspruch 1 bis 6, dadurch gekennzeichnet, daß der Wulstkern haftungsfrei im Wulst angeordnet ist.

8. Luftreifen-Fahrzeugrad nach Anspruch 1 bis 7, dadurch gekennzeichnet, daß ein an sich bekannter Wulstverstärker (9) im Wulst angeordnet ist, der mit seinem radial inneren Teil radial vom Wulstkern entfernt angeordnet ist (Fig. 4a).

9. Luftreifen-Fahrzeugrad nach Anspruch 8, dadurch gekennzeichnet, daß der Raum zwischen Wulstkern und radial innerem Teil des Wulstverstärkers mit einem Preßkautschukfüllteil (21) versehen ist (Fig. 4a).

10. Luftreifen-Fahrzeugrad nach Anspruch 1 bis 9, dadurch gekennzeichnet, daß die Wulstinnenkontur des Reifenwulstes zwischen der Innenkrümmung k und der Fußspitze unter Winkel ε bis zu 30° abgeschrägt ausgebildet ist (Fig. 4a).

11. Luftreifen-Fahrzeugrad nach Anspruch 1, dadurch gekennzeichnet, daß die Stützfläche (15) der erhabenen Notlaufstütze (13) der Felge (10) im wesentlichen zylindrisch ausgebildet ist und die Stützwände (14) geneigt zur Äquatorebene vorliegen (Fig. 5).

12. Luftreifen-Fahrzeugrad nach Anspruch 1 und 11, dadurch gekennzeichnet, daß die Stützfläche (15) erhaben gekrümmt ausgebildet ist.

13. Luftreifen-Fahrzeugrad nach Anspruch 1, 11 und 12, dadurch gekennzeichnet, daß die seitlichen Stützwände (14) unter einem Winkel δ von mindestens 10° geneigt ausgebildet sind.

14. Luftreifen-Fahrzeugrad nach Anspruch 1, 11 bis 13, dadurch gekennzeichnet, daß das Felgenhorn (11) und der axial innere Teil der Felgenschulter (12) eine reibungsmindernde Schicht aufweisen.

15. Luftreifen-Fahrzeugrad nach Anspruch 1, 11 bis 14, dadurch gekennzeichnet, daß die Stützfläche (15) der Felge eine reibungsmindernde Schicht aufweist.

## Claims

1. Vehicle wheel, which is formed from a pneumatic tyre (2) and a one-part wheel rim (10) and is utilisable in the event of an emergency, wherein the rim has on each side a rim flange (11), which is disposed axially externally and has a radial height $H_F$ — measured from the rim diameter $F_D$ — a flat rim shoulder (12), which communicates axially internally, and a radially raised emergency support (13), which is disposed between the rim shoulders and has a cap-like cross-section, the emergency support being formed from supporting walls (14), which are connected to the rim shoulders (12), and from an annular supporting face (15) with an outer diameter $S_A$ which corresponds to at least the rim flange diameter $F_{HD}$ plus twice the wall thickness (d) of the lateral wall (6) in the bead transition region, but it is not greater than the rim flange diameter $F_{HD}$ plus half the height ($R_H$) of the tyre cross-section, and in which vehicle wheel the pneumatic tyre (2) has a carcase (3), more especially a radial carcase, with tyre beads (7) on both sides, which beads each comprise a respective flat bead base (7a) with a bead tip (7b) and a respective substantially inextensible bead core (8), as well as a profiled tread strip (5), more especially a belt-reinforced tread strip, the radial spacing y between the inner diameter of the bead core $K_{ID}$ and the rim diameter $F_D$ being smaller than the radial height $H_F$ of the rim flange (11), characterised in that the following equations for the tyre bead apply to the tyre which is assembled in its operational position (E):

$0.4\ H_F\ <y<H_F$ and a $<0.5\ H_W$, "a" being the axial spacing of the bead core axially internally relative to the radially extending tangent at the inner configuration of the bead K, and "$H_W$" being the radial height of the bead base — measured between the inner diameter of the bead core $K_{ID}$ and the bead base (7a) — the bead core (8) lies on the neutral axis of the lateral wall (6) and is rotatably and eccentrically mounted in the tyre bead (7) in such a manner that the tyre bead (8) is pivotable from an assembled position (D) — in which the bead core (8) is offset axially and radially inwardly (D8) relative to the operational position (E) — into the operational position (E) and thereby, with respect to its neutral axis, extends relative to a line perpendicular to the wheel axis, which extends through the bead core (8), it is displaceable about an arcuate angle γ in a lever-like manner on the rim shoulder (12), the bead tip (7b) always being supported on the rim shoulder (12) and the tyre bead (7) being freely displaceable eccentrically in the space between rim flange (11), rim shoulder (12) and emergency support (13).

2. Pneumatically tyred vehicle wheel according to claim 1, characterised in that the arcuate angle γ is at least 45° (Fig. 3).

3. Pneumatically tyred vehicle wheel according to claims 1 and 2, characterised in that the bead core (8) is a twisted, round wire core which is known per se (Fig. 4a).

4. Pneumatically tyred vehicle wheel according to claims 1 and 2, characterised in that the bead core (8a) is a wire core, which is known per se and has a quadrilateral to hexagonal cross-section, the wire core being provided externally with a strip of material, whereby a circle is formed (Fig. 4b).

5. Pneumatically tyred vehicle wheel according to claims 3 to 4, characterised in that the bead core, or that is to say the circular core, is surrounded by a fabric.

6. Pneumatically tyred vehicle wheel according to claims 1 to 5, characterised in that there is a bead core which is formed from non-metallic filament, cable or rope elements.

7. Pneumatically tyred vehicle wheel according to claims 1 to 6, characterised in that the bead core is disposed in the bead in an adhesion-free manner.

8. Pneumatically tyred vehicle wheel according to claims 1 to 7, characterised in that a bead reinforcing member (9), which is known per se, is disposed in the bead, which bead reinforcing member is disposed with its radially internal portion radially remote from the bead core (Fig. 4a).

9. Pneumatically tyred vehicle wheel according to claim 8, characterised in that the space between the bead core and radially internal portion of the bead reinforcing member is provided with a compressed rubber filling (21) (Fig. 4a).

10. Pneumatically tyred vehicle wheel according to claims 1 to 9, characterised in that the inner configuration of the tyre bead between the internal curvature k and the bead tip is inclined at an angle ε up to 30°.

11. Pneumatically tyred vehicle wheel according to claim 1, characterised in that the supporting face (15) of the raised emergency support (13) of the rim (10) is of a substantially cylindrical form, and the supporting walls (14) are inclined relative to the equatorial plane (Fig. 5).

12. Pneumatically tyred vehicle wheel according to claims 1 and 11, characterised in that the supporting face (15) is raised and curved.

13. Pneumatically tyred vehicle wheel according to claims 1, 11 and 12, characterised in that the lateral supporting walls (14) are inclined at an angle δ of at least 10°.

14. Pneumatically tyred vehicle wheel according to claims 1, 11 to 13, characterised in that the rim flange (11) and the axially internal portion of the rim shoulder (12) have a friction-reducing layer.

15. Pneumatically tyred vehicle wheel according to claims 1, 11 to 14, characterised in that the supporting face (15) of the rim has a friction-reducing layer.

**Revendications**

1. Roue de véhicule, constituée d'un pneumatique (2) et d'une jante monobloc (10), qui est utilisable en roulage de détresse et dans laquelle la jante comporte des deux côtés respectivement une moulure (11) disposée axialement à l'extérieur et d'une hauteur radiale $H_F$ – mesurée à partir du diamètre de jante $F_D$ –, respectivement un épaulement plan (12) placé à la suite axialement vers l'intérieur et une partie d'appui pour roulage de détresse (13) ayant en section droite une forme de chapeau, faisant saillie radialement et disposée entre les épaulements de la jante, cette partie d'appui comportant des parois d'appui (14) reliées aux épaulements de jante (12) et une surface annulaire d'appui (15) ayant un diamètre extérieur $S_A$, qui est au moins égal au diamètre $F_{HD}$ de moulure de jante plus le double de l'épaisseur (d) de la paroi latérale (6) dans une zone de transition de talon, mais qui n'est cependant pas supérieur au diamètre $F_{HD}$ de moulure de jante plus la demi-hauteur $(R_H)$ de la section de pneumatique, et le pneumatique (2) de la roue de véhicule comportant une carcasse (3), notamment radiale, pourvue de chaque côté d'un talon (7), qui comporte un pied de talon plan (7a) pourvu d'une pointe (7b) et une tringle de talon (8) résistante à la traction, le pneumatique comportant en outre une bande de roulement (5) profilée et notamment renforcée par une ceinture, l'espacement radial (y) du diamètre intérieur $K_{ID}$ de la tringle de talon par rapport au diamètre de jante $F_D$ étant plus petit que la hauteur radial $H_F$ de la moulure de jante (11), caractérisée en ce que, pour le pneumatique monté dans sa position de service (E), il existe pour le talon du pneumatique les relations suivantes: $0,4\ H_F < y < H_F$ et a $< 0,5\ H_W$, où «a» désigne l'espacement axial de la tringle de talon, axialement vers l'intérieur, par rapport à la tangente, orientée radialement, au contour intérieur de talon K tandis que «$H_W$» désigne la hauteur radiale de pied de talon – mesurée entre le diamètre intérieur $K_{ID}$ de tringle de talon et le pied de talon (7a) –, en ce que la tringle de talon (8) est placée sur la fibre neutre de la paroi latérale (6) et est montée de façon tournante et excentrée dans le talon (7) du pneumatique de telle sorte que le talon (7) puisse pivoter depuis une position de montage (D) – dans laquelle la tringle de talon (8) est décalée axialement et radialement vers l'intérieur $(D_B)$ par rapport à la position de service (E) – jusque dans la position de service (E) et qu'il puisse ainsi être déplacé, en relation avec sa fibre neutre et par rapport à une perpendiculaire à l'axe de la roue qui passe par la tringle de talon (8), d'un angle d'arc γ et à la façon d'un levier sur l'épaulement de jante (12), la pointe de talon (7b) s'appuyant alors constamment sur l'épaulement de jante (12) et le talon de pneumatique (7) étant librement déplaçable à la façon d'un excentrique dans le volume compris entre la moulure de jante (11), l'épaulement de jante (12) et la partie d'appui pour roulage de détresse (13).

2. Roue de véhicule à pneumatique selon la revendication 1, caractérisée en ce que l'angle d'arc γ s'élève au moins à 45° (figure 3).

3. Roue de véhicule à pneumatique selon une des revendications 1 et 2, caractérisée en ce que la tringle de talon (8) est une tringle circulaire en fils torsadés de type connu (figure 4a).

4. Roue de véhicule à pneumatique selon une des revendications 1 et 2, caractérisée en ce que la tringle de talon (8a) est une tringle en fils à section à quatre à six côtés de type connu, qui est pourvue extérieurement d'une bande de matière par laquelle est créée une forme circulaire (figure 4b).

5. Roue de véhicule à pneumatique selon une des revendications 3 et 4, caractérisée en ce que la tringle de talon ou la tringle de forme circulaire est entourée d'un tissu.

6. Roue de véhicule à pneumatique selon une des revendications 1 à 5, caractérisée en ce qu'il est prévu une tringle de talon constituée par des élémentes de fils, de câbles ou de torons non métalliques.

7. Roue de véhicule à pneumatique selon une des revendications 1 à 6, caractérisée en ce que la tringle de talon est disposée sans adhérence dans le talon.

8. Roue de véhicule à pneumatique selon une des revendications 1 à 7, caractérisée en ce qu'il est prévu dans le talon un renfort de type connu (9), dont la partie radialement intérieure est espacée radialement de la tringle de talon (figure 4a).

9. Roue de véhicule à pneumatique selon la revendication 8, caractérisée en ce que le volume compris entre la tringle de talon et la partie radialement intérieure du renfort de talon est pourvu d'une partie de remplissage en caoutchouc comprimé (21) (figure 4a).

10. Roue de véhicule à pneumatique selon une des revendications 1 à 9, caractérisée en ce que le contour intérieur du talon de pneumatique entre la courbure intérieure (k) et la pointe de talon est biseauté selon un angle ε jusqu'à 30° (figure 4a).

11. Roue de véhicule à pneumatique selon la revendication 1, caractérisée en ce que la surface d'appui (15) de la partie surélevée d'appui pour roulage de détresse (13) de la jante (10) est réalisée avec une forme sensiblement cylindrique et les parois d'appui (14) sont inclinées par rapport à un plan équatorial (figure 5).

12. Roue de véhicule à pneumatique selon une des revendications 1 et 11, caractérisée en ce que la surface d'appui (15) est incurvée et surélevée.

13. Roue de véhicule à pneumatique selon une des revendications 1, 11 et 12, caractérisée en ce que les parois latérales d'appui (14) sont inclinées d'un angle δ d'au moins 10°.

14. Roue de véhicule à pneumatique selon une des revendications 1, 11 à 13, caractérisée en ce que la moulure de jante (11) et la partie axialement intérieure de l'épaulement de jante (12) comportent une couche de réduction de frottement.

15. Roue de véhicule à pneumatique selon une des revendications 1, 11 à 14, caractérisée en ce que la surface d'appui (15) de la jante comporte une couche de réduction de frottement.

Fig. 1

Fig. 2

E                    D

$\gamma$

Fig. 3

11    $E_8$    $H$    $K$    $D_8$    $a$

$H_F$    $Y$    $H_W$

$K_{ID}$

$F_{HD}$    $T_D$

3    $a$

9    $k$

20

8    $H_W$

21    $\varepsilon$

Fig. 4a

8a

20b

Fig. 4b

$\delta$    15

11    13

14    10

Fig. 5    12

17

16

Fig. 6

11